# FASCICULE DE BREVET EUROPEEN

(11) **EP 0 907 063 B1**
(45) Date de publication et mention de la délivrance du brevet: **19.03.2003**
(21) Numéro de dépôt: 98402380.4
(22) Date de dépôt: 28.09.1998
(51) Int. Cl.: F28F 9/00, F04D 29/60, B60K 11/04

(54) **Dispositif de fixation d'un accessoire à un échangeur de chaleur**
Befestigungsvorrichtung eines Zubehörs an einem Wärmetauscher
Device for attaching an accessory to a heat exchanger

(30) Priorité: 02.10.1997 FR 9712285
(43) Date de publication de la demande: 07.04.1999
(73) Titulaire: VALEO THERMIQUE MOTEUR S.A., 78321 La Verrière (FR)
(72) Inventeur: Potier, Michel, 78120 Rambouillet (FR)
(74) Mandataire: Rolland, Jean-Christophe

(56) Documents cités:
- EP-A- 0 724 071
- US-A- 1 791 924
- US-A- 3 061 277
- US-A- 5 348 079
- US-A- 5 441 100

## Description

La présente invention concerne d'une manière générale un dispositif de fixation d'un accessoire à un échangeur de chaleur.

Il est connu de monter un accessoire directement sur le faisceau d'un échangeur de chaleur. C'est ainsi que le document FR-A-2730009 décrit la fixation du moteur d'un groupe moto-ventilateur au radiateur de refroidissement du moteur d'un véhicule automobile.

Dans ce document, le bloc de refroidissement de l'échangeur est serré entre deux ensembles d'éléments d'appui par des vis qui traversent le bloc aux travers d'évidements ménagés dans les ailettes entre les tubes. Des entretoises traversent également le bloc dans ces mêmes évidements pour éviter un écrasement des ailettes, et des formes en relief déforment légèrement ces ailettes lors du serrage des vis pour éviter tout glissement du moteur par rapport au bloc de l'échangeur.

Du côté de l'échangeur où est situé le moteur, les éléments d'appui sont formés dans un flasque en matière plastique solidaire du corps du moteur. C'est en particulier dans ce flasque que sont réalisées les formes en relief.

Cette disposition donne généralement satisfaction. Toutefois, elle ne peut être utilisée lorsque la température de fonctionnement dépasse une certaine limite admissible par la matière plastique du flasque. On est alors amené à réaliser un support de moteur en acier. Mais il n'est plus possible dans ce cas de fixer le support directement sur les ailettes en aluminium à cause des risques de corrosion et de détérioration de la liaison mécanique.

La présente invention vise à pallier ces inconvénients.

À cet effet, l'invention a pour objet un ensemble comprenant un accessoire fixé à un échangeur de chaleur comprenant des ailettes en métal, notamment en aluminium, ledit accessoire étant muni de surfaces d'appui agencées pour venir en appui sur lesdites ailettes, caractérisé par le fait que lesdites surfaces d'appui sont formées sur un support d'accessoire en acier solidaire dudit accessoire, et qu'un matériau électriquement isolant est interposé entre les surfaces d'appui et les ailettes de l'échangeur.

Le support d'accessoire étant réalisé en acier, il résiste à toute température de fonctionnement souhaitée. Par ailleurs, les risques de corrosion sont écartés par la présence du matériau électriquement isolant interposé entre les surfaces d'appui en acier et les ailettes en métal, notamment en aluminium.

Dans un premier mode de réalisation de l'invention, ledit matériau est réalisé sous la forme d'un revêtement électriquement isolant, recouvrant lesdites surfaces d'appui.

Ce revêtement électriquement isolant peut être du type peinture ou vernis, s'appliquant à l'état liquide. Il peut également se présenter sous la forme d'un adhésif collé sur les surfaces d'appui. Dans ces deux cas, on prévoit de préférence de réaliser des reliefs d'accrochage, par exemple par emboutissage, dans la partie du support d'accessoire formant les surfaces d'appui.

Dans un autre mode de réalisation, le matériau électriquement isolant est réalisé sous la forme de patins en matière plastique fixés auxdites surfaces d'appui.

La fixation des patins aux surfaces d'appui peut se faire par des moyens d'encliquetage coopérant sur le patin et sur le support d'accessoire.

Les patins comportent avantageusement des reliefs d'accrochage sur leur face en vis-à-vis des ailettes de l'échangeur.

Les patins peuvent également comporter une douille agencée pour s'engager dans un évidemment ménagé dans les ailettes de l'échangeur entre les tubes, de manière à former au moins un partie d'entretoise.

On décrira maintenant, à titre d'exemple non limitatif, deux modes de réalisation particuliers de l'invention, en référence aux dessins schématiques annexés dans lesquels:
- la figure 1 est une vue en élévation d'un moteur de groupe moto-ventilateur fixé à un échangeur de chaleur conformément à un premier mode de réalisation de l'invention;
- la figure 2 est une vue du côté de ce moteur tourné vers l'échangeur de chaleur, celui-ci n'étant pas représenté;
- la figure 3 est une vue en élévation d'un moteur de groupe moto-ventilateur fixé à un échangeur de chaleur conformément à un deuxième mode de réalisation de l'invention;
- la figure 4 est une vue de ce moteur analogue à la figure 2;
- la figure 5 est une vue en perspective à plus grande échelle de l'un des patins représentés aux figures 3 et 4; et
- la figure 6 est une vue en coupe selon la ligne VI-VI de la figure 4.

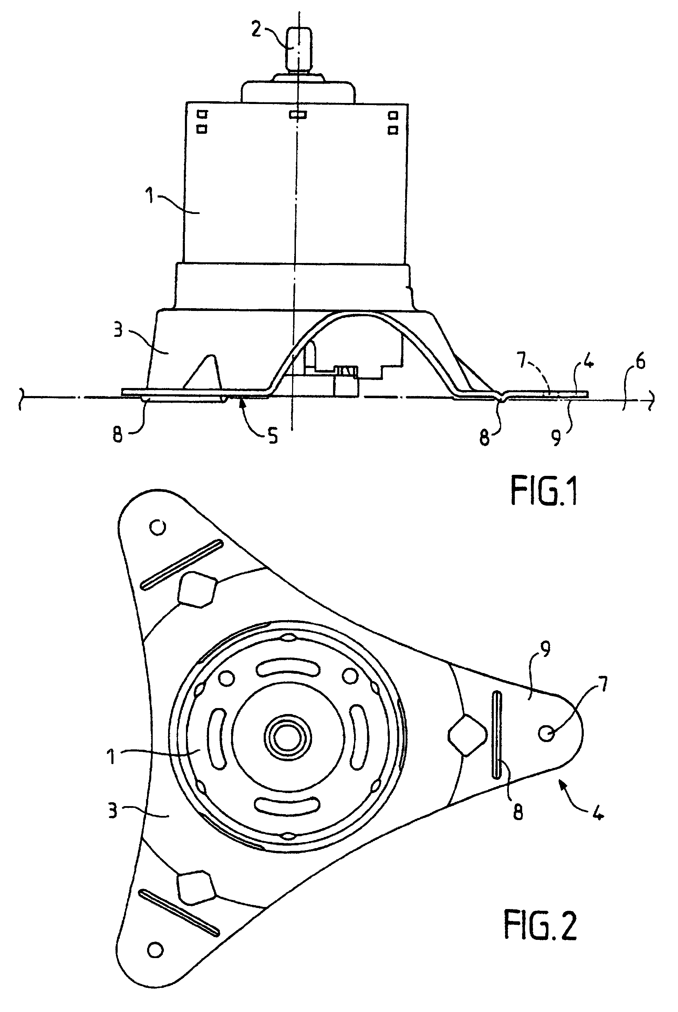

On voit aux figures 1 et 2 le moteur électrique 1 d'un groupe moto-ventilateur dont l'hélice, non représentée, est agencée pour être montée sur l'arbre 2 du moteur.

Un support 3 de moteur est rendu solidaire du moteur 1 par tout moyen convenable. Le support 3 comporte des pattes de fixation 4 formant des surfaces d'appui 5 pour son montage sur un échangeur de chaleur 6, par exemple le radiateur de refroidissement du moteur d'un véhicule automobile. Le support 3 est en tôle d'acier, tandis que les ailettes de l'échangeur 6, seules en contact avec le support 3, sont en aluminium.

Les pattes 4 sont percées de trous 7 pour le passage de vis non représentées. Ces vis permettent le montage de façon connue du moteur 1 sur l'échangeur 6, par l'intermédiaire d'entretoises.

Par ailleurs, la tôle des pattes 4 est emboutie pour former des nervures 8 à section sensiblement triangulaire. Les nervures 8 font saillie des pattes 4 du côté des surfaces d'appui 5, en vis-à-vis de l'échangeur de chaleur 6. Ainsi, lorsque le support de moteur 3 est pressé sur l'échangeur par les vis de montage, les nervures 8 s'enfoncent en déformant légèrement les ailettes de l'échangeur, empêchant tout glissement ultérieur du moteur par rapport à l'échangeur.

Les surfaces d'appui 5 en contact avec l'échangeur 6 sont ici recouvertes d'un revêtement 9 électriquement isolant. Le revêtement 9 peut être de tout type connu susceptible d'être appliqué sur de l'acier, comme une peinture ou un vernis. Son application peut notamment être réalisée par projection ou par trempage.

Le revêtement 9, du fait de son caractère d'isolant électrique, permet d'écarter les risques de corrosion qui seraient autrement liés au contact entre l'acier du support de moteur 3 et l'aluminium des ailettes de l'échangeur 6.

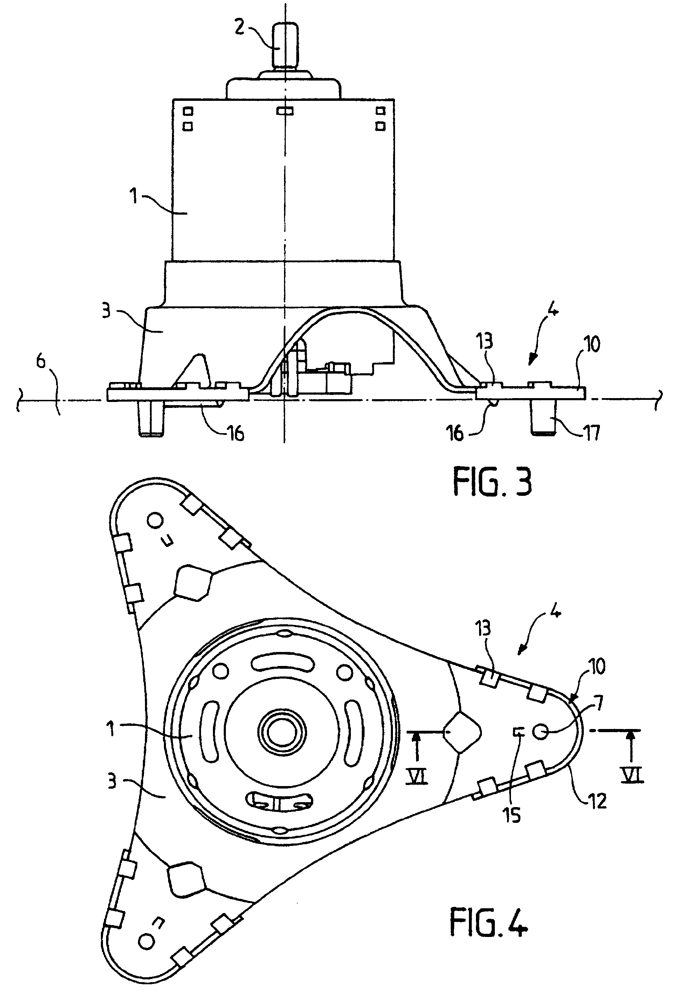

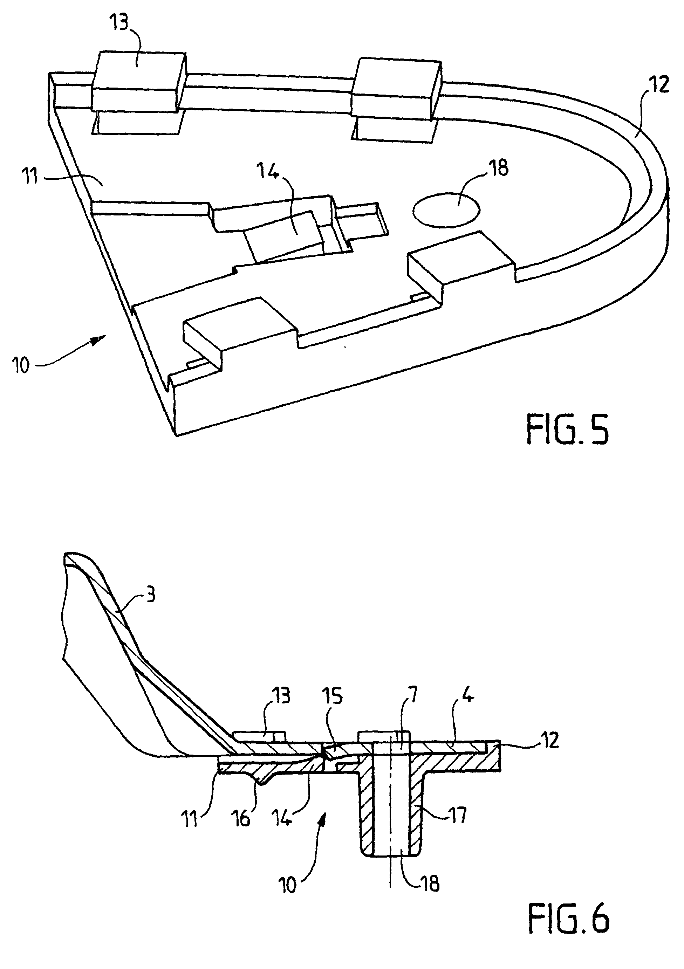

Dans le mode de réalisation des figures 3 à 6, les extrémités des pattes de fixation 4, qui s'appuient sur les ailettes de l'échangeur de chaleur 6, sont munies de patins 10 en matière plastique isolante, interposés entre le support 3 et l'échangeur 6.

Les patins 10 comportent une base sensiblement plane 11 de forme correspondant à celle de l'extrémité des pattes de fixation 4 du support 3. C'est cette base 11 qui est interposée entre le support et l'échangeur. Le bord de la base 11 est muni d'un rebord 12 tourné à l'opposé des ailettes et entourant l'extrémité de la patte 4 le long de la tranche de celle-ci.

Du rebord 12 partent des languettes 13 agencées pour revenir sur la face de la patte 4 opposée à celle qui est en vis-à-vis de l'échangeur. Les languettes 13 assurent donc le l'immobilisation du patin 10 sur la patte 4. Le montage s'effectue en faisant glisser la tôle de la patte 4 entre la base 11 d'une part et les languettes 13 d'autre part.

Le patin 10 est bloqué sur la patte 4 à l'aide d'une autre languette 14 découpée dans la base 11 et faisant saillie de celle-ci du côté du rebord 12 et des languettes 13. Cette languette 14 coopère avec une languette 15 découpée dans la patte 4 et faisant saillie de celle-ci en direction de la base 11 du patin 10. Lorsque le patin 10 est glissé sur la patte 4, la languette 14 possède suffisamment d'élasticité pour se rétracter au passage de la languette 15 en saillie. Puis, lorsque cette languette 15 est dépassée, la languette 14 se détend et s'encliquette derrière la languette 15, assurant le blocage du patin sur la patte de fixation.

La base 11 du patin 10 comporte par ailleurs, de son côté en vis-à-vis de l'échangeur de chaleur 6, une nervure 16 en saillie ayant la même fonction d'accrochage que la nervure 8 du premier mode de réalisation.

Enfin, du même côté que la nervure 16, la base 11 forme un douille 17 en saillie. La douille 17 est percée d'un trou 18 traversant la base 11 dans l'alignement du trou 7 de la patte 4, pour le passage des vis de fixation du moteur 1 sur l'échangeur 6. La douille 17 est engagée dans un évidemment ménagé dans les ailettes de l'échangeur 6 et forme une entretoise pour empêcher un écrasement de ces dernières lors du serrage des vis de fixation.

Comme le revêtement 9, la base 11 des patins 10 empêche une corrosion qui serait due à un contact direct entre le support de moteur 3 et l'échangeur de chaleur 6.

## Revendications

1. Ensemble comprenant un accessoire (1) fixé à un échangeur de chaleur (6) comprenant des ailettes en métal, ledit accessoire étant muni de surfaces d'appui (5) agencées pour venir en appui sur lesdites ailettes, **caractérisé par le fait que** lesdites surfaces d'appui sont formées sur un support d'accessoire en acier (3) solidaire dudit accessoire, et qu'un matériau électriquement isolant (9;10) est interposé entre les surfaces d'appui et les ailettes de l'échangeur.

2. Ensemble selon la revendication 1, dans lequel ledit matériau est réalisé sous la forme d'un revêtement électriquement isolant (9), recouvrant lesdites surfaces d'appui.

3. Ensemble selon la revendication 2, dans lequel ledit revêtement électriquement isolant est du type peinture ou vernis, s'appliquant à l'état liquide.

4. Ensemble selon la revendication 2, dans lequel ledit revêtement électriquement isolant se présente sous la forme d'un adhésif collé sur les surfaces d'appui.

5. Ensemble selon l'une quelconque des revendications 2 à 4, dans lequel des reliefs d'accrochage (8) sont formés dans la partie du support d'accessoire formant les surfaces d'appui.

6. Ensemble selon la revendication 1, dans lequel le matériau électriquement isolant est réalisé sous la forme de patins (10) en matière plastique fixés auxdites surfaces d'appui.

7. Ensemble selon la revendication 6, dans lequel les patins sont fixés aux surfaces d'appui par des moyens d'encliquetage (14,15) coopérant sur le patin et sur le support d'accessoire.

8. Ensemble selon l'une quelconque des revendications 6 et 7, dans lequel les patins comportent des reliefs d'accrochage (16) sur leur face en vis-à-vis des ailettes de l'échangeur.

9. Ensemble selon l'une quelconque des revendications 6 à 8, dans lequel les patins comportent une douille (17) agencée pour s'engager dans un évidemment ménagé dans les ailettes de l'échangeur entre les tubes, de manière à former au moins un partie d'entretoise.

## Patentansprüche

1. Einheit mit einem Zubehör (1), das an einem Wärmetauscher (6) befestigt ist, der Metallrippen umfasst, wobei das Zubehör mit Auflageflächen (5) versehen ist, die so ausgelegt sind, dass sie auf den Rippen aufliegen, **dadurch gekennzeichnet, dass** die Auflageflächen auf einem Zubehörträger (3) aus Stahl geformt sind, der fest mit dem Zubehör verbunden ist, und ein elektrisch isolierender Werkstoff (9; 10) zwischen den Auflageflächen und den Rippen des Wärmetauschers eingefügt ist.

2. Einheit nach Anspruch 1, bei der der Werkstoff in Form einer elektrisch isolierenden Beschichtung (9) hergestellt ist, die die Auflageflächen bedeckt.

3. Einheit nach Anspruch 2, bei der die elektrisch isolierende Beschichtung ein Anstrich oder ein Lack ist, der im flüssigen Zustand aufgetragen wird.

4. Einheit nach Anspruch 2, bei der die elektrisch isolierende Beschichtung ein Kleber ist, der auf die Auflageflächen geklebt wird.

5. Einheit nach einem der Ansprüche 2 bis 4, bei der Haftungsreliefs (8) in dem Teil des Zubehörträgers geformt sind, der die Auflageflächen bildet.

6. Einheit nach Anspruch 1, bei der der elektrisch isolierende Werkstoff aus Kufen (10) aus Kunststoff besteht, die auf den Auflageflächen befestigt werden.

7. Einheit nach Anspruch 6, bei der die Kufen an den Auflageflächen durch Einrastmittel (14, 15) befestigt werden, die auf der Kufe und auf dem Zubehörträger zusammenwirken.

8. Einheit nach Anspruch 6, bei der die Kufen Haftreliefs (16) auf ihrer Seite aufweisen, die den Rippen des Wärmetauschers gegenüberliegt.

9. Einheit nach einem der Ansprüche 6 bis 8, bei der die Kufen eine Hülse (17) umfassen, die so ausgelegt ist, dass sie in eine Aussparung eingreift, die in den Rippen des Wärmetauschers zwischen den Rohren derart angeordnet ist, dass zumindest ein Teil eines Abstandshalters gebildet wird.

## Claims

1. Assembly comprising an accessory (1) fastened to a heat exchanger (6) comprising metal fins, the said accessory being provided with bearing surfaces (5) designed to bear on the said fins, **characterized in that** the said bearing surfaces are formed on a steel accessory support (3) integral with the said accessory and **in that** an electrically insulating material (9; 10) is interposed between the bearing surfaces and the fins of the exchanger.

2. Assembly according to Claim 1, in which the said material is made in the form of an electrically insulating coating (9) covering the said bearing surfaces.

3. Assembly according to Claim 2, in which the said electrically insulating coating is of the paint or varnish type, being applied in the liquid state.

4. Assembly according to Claim 2, in which the said electrically insulating coating is in the form of an adhesive bonded to the bearing surfaces.

5. Assembly according to any one of Claims 2 to 4, in which catching reliefs (8) are formed in that part of the accessory support forming the bearing surfaces.

6. Assembly according to Claim 1, in which the electrically insulating material is made in the form of plastic shoes (10) fastened to the said bearing surfaces.

7. Assembly according to Claim 6, in which the shoes are fastened to the bearing surfaces by snap-in means (14, 15) cooperating on the shoe and on the accessory support.

8. Assembly according to either of Claims 6 and 7, in which the shoes include catching reliefs (16) on their face that faces the fins of the exchanger.

9. Assembly according to any one of Claims 6 to 8, in which the shoes include a socket (17) designed to engage in a recess provided in the fins of the exchanger between the tubes, so as to form at least one spacer part.
